# EUROPÄISCHE PATENTANMELDUNG

(11) **EP 4 556 211 A1**
(43) Veröffentlichungstag der Anmeldung: **21.05.2025**
(21) Anmeldenummer: 24169971.9
(22) Anmeldetag: 12.04.2024
(51) Int. Cl.: B29D 30/06

(54) **VERFAHREN ZUM VULKANISIEREN EINES FAHRZEUGREIFENS**

(30) Priorität: 20.11.2023 DE 102023211542
(71) Anmelder: Continental Reifen Deutschland GmbH, 30175 Hannover (DE)
(72) Erfinder: Eder, Jan Martin, 30175 Hannover (DE); Lengemann, Daniel, 30175 Hannover (DE); Jordan, Julian, 30175 Hannover (DE)
(74) Vertreter: Continental Corporation

(57) **Zusammenfassung**

Die Erfindung betrifft ein Verfahren zum Vulkanisieren eines Fahrzeugreifens (2) mit den Schritten:
- Einlegen eines Fahrzeugreifens (2) in eine Heizpresse (1),
- Erzeugen eines ersten Prozessdruckes im Fahrzeugreifen (2) oder in einem Balg (6),
- Schließen der Heizpresse (1) durch das Zusammenfahren des Heizpressen-Oberteils (4) und des Heizpressen-Unterteils (5) zueinander,
- Erzeugen eines zweiten Prozessdruckes im Fahrzeugreifen (2) oder im Balg (6),
- Vulkanisieren des Fahrzeugreifens (2),
- Öffnen der Heizpresse (1),
- Entfernen des vulkanisierten Fahrzeugreifens (2) von dem Balg (6) und/oder dem Mittenmechanismus (3).

## Beschreibung

Die Erfindung betrifft ein Verfahren zum Vulkanisieren eines Fahrzeugreifens mit den Schritten:
- Einlegen eines Fahrzeugreifens in eine Heizpresse,
- Erzeugen eines ersten Prozessdruckes im Fahrzeugreifen oder in einem Balg,
- Schließen der Heizpresse durch das Zusammenfahren des Heizpressen-Oberteils und des Heizpressen-Unterteils zueinander,
- Erzeugen eines zweiten Prozessdruckes im Fahrzeugreifen oder im Balg, Vulkanisieren des Fahrzeugreifens,
- Öffnen der Heizpresse,
- Entfernen des vulkanisierten Fahrzeugreifens von dem Balg und/oder dem Mittenmechanismus.

Weiterhin betrifft die Erfindung eine Heizpresse sowie einen Fahrzeugreifen.

Es sind Heizpressen bekannt, die mittels Wasserdampf einen Überdruck in einem Balg erzeugen. Durch den Balg wird der Fahrzeugreifen in die Heizform gedrückt und von innen beheizt. Mittengeteilte Heizpressen weisen ein Heizpressen-Oberteil sowie das Heizpressen-Unterteil auf, welche jeweils einen Seitenwandbereich und einen Laufstreifenbereich aufweisen. Das Heizpressen-Oberteil sowie das Heizpressen-Unterteil werden zur Vulkanisation des Fahrzeugreifens ebenfalls mit Wasserdampf beheizt. Ist der Fahrzeugreifen ausreichend vulkanisiert, wird der Heizprozess beendet, indem der Prozessdruck im Balg verringert wird und das Heizpressen-Oberteil vom Heizpressen-Unterteil entfernt wird. Der geheizte Fahrzeugreifen wird manuell aus der Heizpresse entnommen und dabei von dem Heizpressen-Unterteil entfernt. Es hat sich gezeigt, dass durch die längere Kontaktzeit des Fahrzeugreifens mit dem Heizpressen-Unterteil im Verhältnis zur Kontaktzeit des Fahrzeugreifens mit dem Heizpressen-Oberteil die Fahrzeugreifen in Teilbereichen überheizt werden, was zu einer Beschädigung des Kautuschnetzes führt, beziehungsweise zu einer Reversion. Dies führt zu erhöhtem Rollwiderstand und beschleunigter Alterung führt.

Weiterhin sind aufwendigere Heizpressen bekannt, die einen Container mit Formteilen oder Segmenten aufweisen, die eine automatisierte Entnahmevorrichtung aufweisen, um sicher zu stellen, dass der Fahrzeugreifen unmittelbar am Ende des Heizprozesse von Heizpressen-Unterteilen entfernt werden. Bekannte Entnahmevorrichtungen sind kostenintensiv und beanspruchen zusätzlichen Bauraum. Weiterhin hat sich gezeigt, dass am Ende des Heizprozesses ein unmittelbares Entfernen des Fahrzeugreifens vom Balg nachteilig ist, da Fahrzeugreifen in diesem Zustand zu einer plastischen Verformung neigen und beispielweise Rundlauffehler entstehen können.

Vor diesem Hintergrund liegt der Erfindung die Aufgabe zugrunde, ein Verfahren sowie eine Heizpresse derart auszuführen, dass keine Bereiche des Fahrzeugreifens beim Vulkanisieren überheizt werden, wobei der Aufbau der Heizpresse möglichst einfach ist, und bevorzugt in einfacher Form bei bestehenden Heizpressen nachgerüstet werden kann. Weiterhin soll bei einer kurzen Prozesszeit eine plastische Verformung der Fahrzeugreifen beim Entnehmen aus der Heizpresse vermeidbar sein.

Diese Aufgabe wird gelöst mit einem Verfahren gemäß den Merkmalen des Patentanspruches 1 sowie einer Heizpresse und einem Fahrzeugreifen gemäß den nebengeordneten Ansprüchen. Die Unteransprüche betreffen besonders zweckmäßige Weiterbildungen der Erfindung.

Erfindungsgemäß ist also eine Verfahren zum Vulkanisieren eines Fahrzeugreifens vorgesehen mit den Schritten:
a) Einlegen eines Fahrzeugreifens in eine Heizpresse,
b) Erzeugen eines ersten Prozessdruckes im Fahrzeugreifen oder in einem Balg,
c) Schließen der Heizpresse durch das Zusammenfahren des Heizpressen-Oberteils und des Heizpressen-Unterteils zueinander,
d) Erzeugen eines zweiten Prozessdruckes im Fahrzeugreifen oder im Balg,
e) Vulkanisieren des Fahrzeugreifens,
f) Verringern und Einstellen des Prozessdruckes auf einen Überdruck von zumindest 0,2 bar im Fahrzeugreifen oder im Balg,
g) Öffnen der Heizpresse,
h) Entfernen des vulkanisierten Fahrzeugreifens von dem Balg und/oder dem Mittenmechanismus.

Das Verringern und Einstellen des Prozessdruckes auf einen Überdruck von zumindest 0,2 bar im Fahrzeugreifen oder im Balg, ermöglicht es, prozesssicher und mit einer guten Reproduzierbarkeit am Ende des Heizprozesses den Vulkanisationsprozess an allen Außenseiten des Fahrzeugreifens zu beenden, wobei der Fahrzeugreifen besonders schonend gelagert wird. Ein Entfernen von dem Heizpressen-Unterteil wird erreicht, da der Fahrzeugreifen sich, aufgrund des in ihm herrschenden Überdrucks, beim Öffnen der Heizpresse aufwärts bewegt.

Eine besonders gleichmäßige Vulkanisation des Fahrzeugreifens wird erreicht. Durch die Lagerung des Fahrzeugreifens durch den Mittenmechanismus wird eine besonders einfache Entnahme des Fahrzeugreifens aus der Heizpresse ermöglicht, wodurch Prozesszeiten verringert werden können. Weiterhin kann der Mittenmechanismus am Ende des Heizprozesses bei konstantem Prozessdruck mit einem kalten Gas gespeist werden, was zu einer beschleunigten Abkühlung des Fahrzeugreifens führt und insbesondere einer plastischen Verformung des Fahrzeugreifens bei der Entnahme vom Mittenmechanismus entgegenwirkt.

Eine bevorzugte Ausführungsform sieht vor, dass nach Schritt g) und vor Schritt h) der Überdruck im Fahrzeugreifen oder im Balg verringert wird. Durch die Verringerung des Überdrucks im Fahrzeugreifen oder im Balg wird einerseits eine besonders schonende Lagerung des Fahrzeugreifens während seines Verfahrens relativ vom Heizpressen-Oberteil sowie relativ zum Heizpressen-Unterteil sichergestellt und andererseits eine besonders einfache Entnahme des Fahrzeugreifens vom Balg oder dem Mittenmechanismus ermöglicht.

Eine weitere bevorzugte Ausführungsform sieht vor, dass nach Schritt g) und vor Schritt h) der Fahrzeugreifen an seiner Innenseite mit einem kalten Gas gekühlt wird. Hierdurch wird eine besonders schnelle Abkühlung des Fahrzeugreifens von Innen ermöglicht, wodurch die Möglichkeiten der Temperaturführung des Fahrzeugreifens beim Vulkanisieren erweitert werden. Eine schnelle Abkühlung ermöglicht weiterhin eine kurze Prozesszeit, wobei eine plastische Verformung des noch erwärmten Fahrzeugreifens vermieden wird.

Eine weitere bevorzugte Ausführungsform sieht vor, dass in Schritt f) der Prozessdruck auf einen Überdruck von zumindest 0,3 bar, bevorzugt von zumindest 0,4 bar, weiter bevorzugt von zumindest 0,6 bar, sowie bevorzugt auf maximal 2 bar, weiter bevorzugt auf maximal 1,5 bar, weiter bevorzugt auf maximal 1,2 bar und weiter bevorzugt auf maximal 1 bar im Fahrzeugreifen oder im Balg eingestellt wird. Es hat sich gezeigt, dass bei einem Prozessdruck von zumindest 0,3 bar eine besonders sichere Lagerung des Fahrzeugreifens erreicht wird. Weiterhin hat sich gezeigt, dass bei Prozessdrücken von größer als 2 bar der Fahrzeugreifen durch den Druck Qualitätseinbußen erleidet und ein Entnehmen des Fahrzeugreifens aus der Heizpresse erschwert wird.

Eine weitere bevorzugte Ausführungsform sieht vor, dass in Schritt f) Wasserdampf aus dem Balg oder dem Fahrzeugreifen entfernt wird, wobei ein Druck von kleiner als 0,2 bar erzeugt wird und nachfolgend ein trockenes Gas zum Einstellen des Prozessdrucks verwendet wird. Hierdurch wird eine effektive Verringerung der Temperatur im Fahrzeugreifeninneren erreicht. Weiterhin kann mittels eines trockenen Gases der Prozessdruck in einfacher Form mit hoher Genauigkeit sowie Prozesssicher eingestellt werden.

Erfindungsgemäß ist eine Heizpresse vorgesehen zum Vulkanisieren eines Fahrzeugreifens, bevorzugt eines Zweiradreifens, insbesondere eines Fahrradreifens, bevorzugt zum Durchführen eines erfindungsgemäßen Verfahrens, wobei die Heizpresse ein Heizpressen-Oberteil sowie ein Heizpressen-Unterteil aufweist, wobei das Heizpressen-Oberteil sowie das Heizpressen-Unterteil jeweils einen Seitenwandbereich und einen Laufstreifenbereich aufweisen, wobei die Heizpresse einen Mittenmechanismus zur Lagerung des Fahrzeugreifens aufweist, wobei die Heizpresse ein automatisches Trockengasventil aufweist.

Das automatische Trockengasventil ermöglicht das Verringern und Einstellen des Prozessdruckes auf einen Überdruck von zumindest 0,2 bar im Fahrzeugreifen oder im Balg prozesssicher und mit einer guten Reproduzierbarkeit am Ende des Heizprozesses.

Erfindungsgemäß ist eine Fahrzeugreifen hergestellt mit einem erfindungsgemäßen Verfahren und bevorzugt mit einer erfindungsgemäßen Heizpresse vorgesehen. Derartig hergestellte Fahrzeugreifen sind besonders prozesssicher und effizient herstellbar und weisen prozesssicher beispielweise einen besonders geringen Rollwiderstand auf.

Erfindungsgemäß ist eine Heizpresse zum Vulkanisieren eines Fahrzeugreifens, bevorzugt eines Zweiradreifens, insbesondere eines Fahrradreifens vorgesehen, wobei ein Heizpressen-Oberteil sowie ein Heizpressen-Unterteil jeweils einen Seitenwandbereich und einen Laufstreifenbereich aufweisen. Die Heizpresse weist einen Mittenmechanismus zur Lagerung des Fahrzeugreifens auf, wobei der Mittenmechanismus dazu eingerichtet ist, den Fahrzeugreifen lagernd zum Heizpressen-Oberteil sowie zum Heizpressen-Unterteil automatisiert zu verfahren.

Die automatisierte Verfahrbarkeit des Mittenmechanismus zum Heizpressen-Oberteil sowie zum Heizpressen-Unterteil, also zu sämtlichen den Fahrzeugreifen formgebenden Heizpressenteilen, ermöglicht es, prozesssicher und mit einer guten Reproduzierbarkeit am Ende des Heizprozesses den Vulkanisationsprozess an allen Außenseiten des Fahrzeugreifens zu beenden, wobei der Fahrzeugreifen besonders schonend gelagert wird. Eine besonders gleichmäßige Vulkanisation des Fahrzeugreifens wird erreicht. Durch die Lagerung des Fahrzeugreifens durch den Mittenmechanismus wird eine besonders einfache Entnahme des Fahrzeugreifens aus der Heizpresse ermöglicht, wodurch Prozesszeiten verringert werden können. Weiterhin kann der Mittenmechanismus am Ende des Heizprozesses bei konstantem Prozessdruck mit einem kalten Gas gespeist werden, was zu einer beschleunigten Abkühlung des Fahrzeugreifens führt und insbesondere einer plastischen Verformung des Fahrzeugreifens bei der Entnahme vom Mittenmechanismus entgegenwirkt.

Eine bevorzugte Ausführungsform sieht vor, dass der Mittenmechanismus einen Balg zur Lagerung des Fahrzeugreifens aufweist. Die Verwendung eines Balgs zur Lagerung des Fahrzeugreifens ermöglicht eine besonders einfache Ausführungsform des Mittenmechanismus. Weiterhin werden durch einen Balg Lagerungsspuren des Mittenmechanismus am Fahrzeugreifen vermieden.

Eine weitere bevorzugte Ausführungsform sieht vor, dass der Balg mittels Wasserdampf und beziehungsweise oder mittels eines Gases unter Druck setzbar ist. Die Verwendung von Wasserdampf hat sich als besonders kostengünstig realisierbar gezeigt, insbesondere wenn Wasserdampf für die Außenheizung der Heizpresse bereits vorhanden ist. Gase, also trockene Gase, ermöglichen ebenfalls in einfacher Weise einen Prozessdruck zu erzeugen, wobei Gase weiterhin einen temperaturunabhängigen Prozessdruck ermöglichen. Auch die Verwendung von Wasserdampf, insbesondere zu Beginn des Heizprozesses, sowie Gas, insbesondere im weiteren Verlauf des Heizprozesses, in Kombination, haben sich hinsichtlich der Energieeinbringung in den Fahrzeugreifen als vorteilhaft erwiesen.

Eine weitere bevorzugte Ausführungsform sieht vor, dass der Mittenmechanismus elektromotorisch oder mittels eines Hydraulikzylinders verfahrbar ist. Elektromotoren sowie Hydraulikzylinder haben sich zum Verfahren des Mittenmechanismus als kostengünstig und besonders prozesssicher erwiesen.

Eine weitere bevorzugte Ausführungsform sieht vor, dass der Mittenmechanismus auf unterschiedliche Reifenbreiten einstellbar ist. Eine Einstellbarkeit des Mittenmechanismus auf unterschiedliche Reifenbreiten ermöglicht ein einfaches Umrüsten der Heizpresse auf unterschiedliche Fahrzeugreifen.

Eine weitere bevorzugte Ausführungsform sieht vor, dass der Mittenmechanismus Balgklemmringe aufweist, wobei der Mittenmechanismus bei konstantem Abstand zwischen den Balgklemmringen zum Heizpressen-Oberteil sowie zum Heizpressen-Unterteil verfahrbar ist. Ein konstanter Abstand zwischen den Balgklemmringen während des Verfahrens zum Heizpressen-Oberteil sowie zum Heizpressen-Unterteil ermöglicht eine besonders schonende Lagerung des Fahrzeugreifens am Ende des Vulkanisationsprozesses. Es wird beispielweise ein besonders guter Rundlauf des Fahrzeugreifens sichergestellt.

Eine weitere bevorzugte Ausführungsform sieht vor, dass der Mittenmechanismus dazu eingerichtet ist, den Fahrzeugreifen in seinen Wulstbereichen zur Lagerung des Fahrzeugreifens dichtend zu klemmen. Das Klemmen des Fahrzeugreifens in seinen Wulstbereichen ermöglicht das unmittelbare und dichtende Klemmen des Fahrzeugreifens am Mittenmechanismus. Hierdurch kann ein Balg entfallen, sodass Kosten für die Beschaffung von Bälgen sowie Kosten für den Austausch der Bälge entfallen. Weiterhin wird Ausschuss durch mangelhafte Bälge vermieden.

Erfindungsgemäß ist ein Verfahren zum Vulkanisieren eines Fahrzeugreifens, insbesondere mit einer erfindungsgemäßen Heizpresse nach einem der vorangehenden Ansprüche mit den folgenden Schritten vorgesehen:
a) Einlegen eines Fahrzeugreifens in eine Heizpresse,
b) Erzeugen eines ersten Prozessdruckes im Fahrzeugreifen oder in einem Balg,
c) Schließen der Heizpresse durch das Zusammenfahren des Heizpressen-Oberteils und des Heizpressen-Unterteils zueinander,
d) Erzeugen eines zweiten Prozessdruckes im Fahrzeugreifen oder im Balg,
e) Vulkanisieren des Fahrzeugreifens,
f) Verringern des Prozessdruckes auf einen geringeren Überdruck im Fahrzeugreifen oder im Balg,
g) Öffnen der Heizpresse,
h) Verfahren eines Mittenmechanismus relativ zum Heizpressen-Oberteil sowie zum Heizpressen-Unterteil,
i) Entfernen des vulkanisierten Fahrzeugreifens von dem Balg und beziehungsweise oder dem Mittenmechanismus.

Das automatisierte Verfahren des Mittenmechanismus zum Heizpressen-Oberteil sowie zum Heizpressen-Unterteil ermöglicht es, prozesssicher und mit einer guten Reproduzierbarkeit am Ende des Heizprozesses des Vulkanisationsprozesses an allen Außenseiten des Fahrzeugreifens zu beenden. Eine besonders gleichmäßige Vulkanisation des Fahrzeugreifens wird erreicht. Das Lagern des Fahrzeugreifens durch den Mittenmechanismus ermöglicht eine besonders einfache Entnahme des Fahrzeugreifens aus der Heizpresse, wodurch Prozesszeiten verringert werden können. Weiterhin kann der Mittenmechanismus am Ende des Heizprozesses bei konstantem Prozessdruck mit einem kalten Gas gespeist werden, was zu einer beschleunigten Abkühlung des Fahrzeugreifens führt, was insbesondere einer plastischen Verformung des Fahrzeugreifens bei der Entnahme vom Mittenmechanismus entgegenwirkt.

Eine bevorzugte Ausführungsform sieht vor, dass nach Schritt h) und vor Schritt i) der Überdruck im Fahrzeugreifen oder im Balg verringert wird.

Eine weitere bevorzugte Ausführungsform sieht vor, dass nach Schritt h) und vor Schritt i) der Fahrzeugreifen an seiner Innenseite mit einem kalten Gas gekühlt wird.

Erfindungsgemäß ist ein Fahrzeugreifen hergestellt mit einer erfindungsgemäßem Heizpresse vorgesehen, der bevorzugt mit einem erfindungsgemäßen Verfahren hergestellt wird. Ein mit einer erfindungsgemäßen Heizpresse und insbesondere ein mit einem erfindungsgemäßen Verfahren hergestellter Fahrzeugreifen ist kostengünstig sowie prozesssicher mit besonders hoher Qualität hinsichtlich der erzeugten Vulkanisation und der erzeugten Geometrie herstellbar.

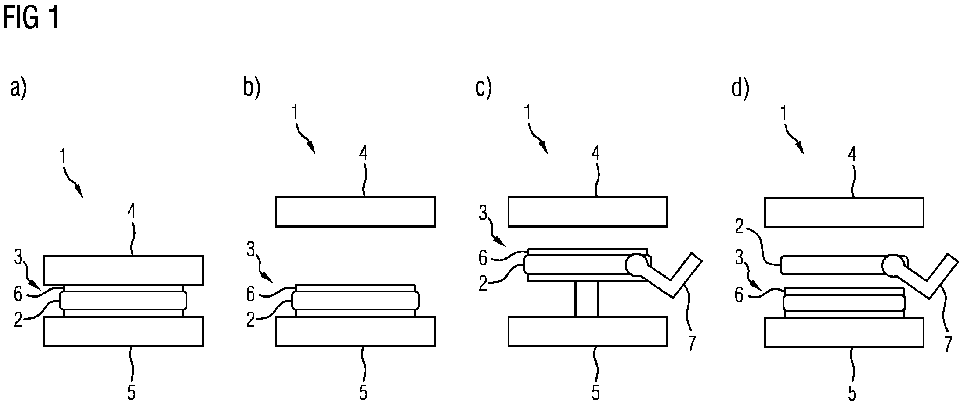

Die Erfindung lässt zahlreiche Ausführungsformen zu. Zur weiteren Verdeutlichung ihres Grundprinzips ist eine mögliche Ausführungsform davon in den Zeichnungen dargestellt und wird nachfolgend beschrieben. Diese zeigt in
Fig. 1 eine Heizpresse zum Vulkanisieren eines Fahrzeugreifens mit einem Mittenmechanismus.

Figur 1 zeigt vier Ansichten einer Heizpresse 1 zum Vulkanisieren eines Fahrzeugreifens 2, wobei sich die Heizpresse 1 in jeder Ansicht a) bis d) in einem anderen Zustand befindet. Die Heizpresse 1 weist einen Mittenmechanismus 3, ein Heizpressen-Oberteil 4 sowie ein Heizpressen-Unterteil 5 auf. Das Heizpressen-Oberteil 4 sowie ein Heizpressen-Unterteil 5 weisen jeweils einen Seitenwandbereich sowie einen Laufstreifenbereich auf. Die Heizpresse 1 ist eine mittengeteilte Presse, sie weist keine Formsegmente auf. Der Mittenmechanismus 3 ist am Heizpressen-Unterteil 5 verfahrbar gelagert, wie es in der Ansicht c) ersichtlich ist. Der Mittenmechanismus 3 weist einen Balg 6 auf, der zum Lagern und zum unter Druck setzen des Fahrzeugreifens 2 vorgesehen ist.

Um den Fahrzeugreifen 2 zu vulkanisieren, wird der Fahrzeugreifen 2 in der Heizpresse 1 auf dem Balg 6 gelagert und die Heizpresse 1 geschlossen. Der Prozessdruck im Balg 6 wird erhöht. Der Vulkanisationsprozess wird durchgeführt. Zur Beendigung des Vulkanisationsprozesses wird der Prozessdruck im Balg 6 verringert und es wird, wie in Ansicht b) dargestellt, das Heizpressen-Oberteil 4 nach oben verfahren. Gleichzeitig oder aber unmittelbar folgend wird der Mittenmechanismus 3 nach oben verfahren, so dass der Fahrzeugreifen 2 sowohl zum Heizpressen-Oberteil 4 als auch zum Heizpressen-Unterteil 5 beabstandet ist. Der Fahrzeugreifen 2 wird auf dem mit einem geringen Druck gefüllten Balg 6 gelagert. Zur Beschleunigung der Abkühlung des Fahrzeugreifens 2 findet im Balg 6 ein Gasaustausch statt, wobei kaltes Gas in den Balg 6 einströmt und durch den Balg 6 erwärmtes Gas ausströmt.

Nach einer ausreichenden Abkühlung des Fahrzeugreifens 2 wird der Fahrzeugreifen 2 von einer Greifvorrichtung 7 gegriffen. Der Druck im Balg 6 wird weiter verringert und der Balg 6 wird nach unten, aus dem Fahrzeugreifen 2 verfahren, der Fahrzeugreifen 2 wird allein durch die Greifvorrichtung 7 positioniert. Die Greifvorrichtung 7 entfernt den Fahrzeugreifen 2 aus dem Heizpressen-Bereich und führt ihn weiteren Prozessschritten zu.

### Bezugszeichenliste

- 1: Heizpresse
- 2: Fahrzeugreifen
- 3: Mittenmechanismus
- 4: Heizpressen-Oberteil
- 5: Heizpressen-Unterteil

- 6: Balg
- 7: Greifvorrichtung

## Patentansprüche

1. Verfahren zum Vulkanisieren eines Fahrzeugreifens (2) mit den Schritten:
a) Einlegen eines Fahrzeugreifens (2) in eine Heizpresse (1),
b) Erzeugen eines ersten Prozessdruckes im Fahrzeugreifen (2) oder in einem Balg (6),
c) Schließen der Heizpresse (1) durch das Zusammenfahren des Heizpressen-Oberteils (4) und des Heizpressen-Unterteils (5) zueinander,
d) Erzeugen eines zweiten Prozessdruckes im Fahrzeugreifen (2) oder im Balg (6),
e) Vulkanisieren des Fahrzeugreifens (2),
f) Verringern und Einstellen des Prozessdruckes auf einen Überdruck von zumindest 0,2 bar im Fahrzeugreifen (2) oder im Balg (6),
g) Öffnen der Heizpresse (1),
h) Entfernen des vulkanisierten Fahrzeugreifens (2) von dem Balg (6) und/oder dem Mittenmechanismus (3).

2. Verfahren nach Anspruch 1, **dadurch gekennzeichnet, dass** nach Schritt g) und vor Schritt h) der Überdruck im Fahrzeugreifen (2) oder im Balg (6) verringert wird.

3. Verfahren nach den Ansprüchen 1 oder 2, **dadurch gekennzeichnet, dass** nach Schritt g) und vor Schritt h) der Fahrzeugreifen (2) an seiner Innenseite mit einem kalten Gas gekühlt wird.

4. Verfahren nach einem der vorangehenden Ansprüche, **dadurch gekennzeichnet, dass** in Schritt f) der Prozessdruck auf einen Überdruck von zumindest 0,3 bar, bevorzugt von zumindest 0,4 bar, weiter bevorzugt von zumindest 0,6 bar, sowie bevorzugt auf maximal 2 bar, weiter bevorzugt auf maximal 1,5 bar, weiter bevorzugt auf maximal 1,2 bar und weiter bevorzugt auf maximal 1 bar im Fahrzeugreifen (2) oder im Balg (6) eingestellt wird.

5. Verfahren nach einem der vorangehenden Ansprüche, **dadurch gekennzeichnet, dass** in Schritt f) Wasserdampf aus dem Balg (6) entfernt wird, wobei ein Druck von kleiner als 0,2 bar erzeugt wird und nachfolgend ein trockenes Gas zum Einstellen des Prozessdrucks verwendet wird.

6. Heizpresse (1) zum Vulkanisieren eines Fahrzeugreifens (2), bevorzugt eines Zweiradreifens, insbesondere eines Fahrradreifens, bevorzugt zum Durchführen eines Verfahren nach einem der vorhergehenden Ansprüche, wobei die Heizpresse (1) ein Heizpressen-Oberteil (4) sowie ein Heizpressen-Unterteil (5) aufweist, wobei das Heizpressen-Oberteil (4) sowie das Heizpressen-Unterteil (5) jeweils einen Seitenwandbereich und einen Laufstreifenbereich aufweisen, wobei die Heizpresse (1) einen Mittenmechanismus (3) zur Lagerung des Fahrzeugreifens (2) aufweist, **dadurch gekennzeichnet, dass**
die Heizpresse ein automatisches Trockengasventil aufweist.

7. Fahrzeugreifen (2) hergestellt mit einem Verfahren nach einem der Ansprüche 1 bis 5 und bevorzugt mit einer Heizpresse (1) nach Anspruch 6.
